(19) Europäisches Patentamt
European Patent Office
Office européen des brevets

(11) **EP 3 114 536 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **15712778.8**

(22) Anmeldetag: **03.03.2015**

(51) Int Cl.:
**G06F 8/10** *(2018.01)*      **G06F 9/48** *(2006.01)*

(86) Internationale Anmeldenummer:
**PCT/AT2015/050055**

(87) Internationale Veröffentlichungsnummer:
**WO 2015/131214 (11.09.2015 Gazette 2015/36)**

(54) **VORRICHTUNG UND VERFAHREN ZUR VERTEILTEN ENTWICKLUNG VON PROZESSPROGRAMMEN EINES VERTEILTEN ECHTZEITSYSTEMS AUF EINER VERTEILTEN ENTWICKLUNGSHARDWARE**

APPARATUS AND METHOD FOR THE DISTRIBUTED DEVELOPMENT OF PROCESS PROGRAMS OF A DISTRIBUTED REAL-TIME SYSTEM ON A DISTRIBUTED DEVELOPMENT HARDWARE

DISPOSITIFS ET PROCÉDÉ POUR LE DÉVELOPPEMENT DISTRIBUÉ DE PROGRAMMES DE PROCÉDÉ D'UN SYSTÈME EN TEMPS RÉEL DISTRIBUÉ SUR UN MATÉRIEL DE DÉVELOPPEMENT DISTRIBUÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2014 AT 501642014**

(43) Veröffentlichungstag der Anmeldung:
**11.01.2017 Patentblatt 2017/02**

(73) Patentinhaber: **TTTech Auto AG**
**1040 Wien (AT)**

(72) Erfinder:
• **POLEDNA, Stefan**
  **A-3400 Klosterneuburg (AT)**
• **KOPETZ, Hermann**
  **A-2500 Baden (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
• **REINHARD WILHELM ET AL: "The Worst-Case Execution-Time Problem - Overview of Methods and Survey of Tools", ACM TRANSACTIONS ON EMBEDDED COMPUTING SYSTEMS, ACM, NEW YORK, NY, US, Bd. 7, Nr. 3, 1. April 2008 (2008-04-01), Seiten 36-53, XP002538651, ISSN: 1539-9087 in der Anmeldung erwähnt**
• **Martin Fowler: "Continuous Integration", , 1. Mai 2006 (2006-05-01), Seiten 1-14, XP055048082, Gefunden im Internet: URL:http://martinfowler.com/articles/conti nuousIntegration.html [gefunden am 2012-12-17]**
• **KOPETZ H ET AL: "The Time-Triggered Architecture", PROCEEDINGS OF THE IEEE. SPECIAL ISSUE ON EMBEDDED SYSTEMS, XX, XX, 1. Juni 2002 (2002-06-01), XP002272118,**
• **None**

**Beschreibung**

Die Erfindung liegt im Bereich der Computertechnik. Sie betrifft eine verteilte Entwicklungshardware gemäß Anspruch 1 und ein Verfahren zur verteilten Entwicklung von *Prozessprogrammen* eines verteilten Echtzeitsystems gemäß Anspruch 2, insbesondere eines umfangreichen verteilten Echtzeitsystems, wobei eine gegebene Aufgabenstellung in eine Vielzahl von parallel ablauffähigen Prozessen aufgeteilt ist, deren Abhängigkeiten in Form eines markierten Prozessgraphen dargestellt sind, und wobei für jeden Prozess eine funktionale Prozessspezifikation vorliegt, und wobei für die Ausführung von jedem Prozess eine Maximalanzahl von Instruktionen *Nwc* auf der Zielhardware vorgegeben ist.

Im Rahmen der Entwicklung eines Echtzeitsystems muss ein Hardware/Softwaresystem erstellt werden das vorgegebene funktionale Eigenschaften innerhalb spezifizierter Echtzeitschranken realisiert.

In vielen Projekten der Echtzeitverarbeitung wird zwischen der *Zielhardware* (ZHW) und der *Entwicklungshardware* (EHW) unterschieden. Der Begriff *Zielhardware* bezieht sich auf die Hardwareumgebung, die in einem geplanten Produkt zum Einsatz kommt. Um die Produktkosten zu minimieren, wird die Zielhardware nur die für das fertige Produkt absolut notwendigen Funktionen unterstützen. Der Begriff *Entwicklungshardware* bezieht sich auf die Hardwareumgebung, die im Rahmen der Systementwicklung verwendet wird. Um die Programmentwicklung zu erleichtern, unterstützt die *Entwicklungshardware* normalerweise wesentlich mehr Funktionen als die Zielhardware, z.B. zusätzliche Funktionen zur interaktiven Simulation des Ablaufs der Programme. Normalerweise ist die Entwicklungshardware, gemessen in ausführbaren Instruktionen/Zeiteinheit, wesentlich leistungsfähiger als die Zielhardware.

Entsprechend dem Stand der Technik wird die Entwicklung eines umfangreichen Echtzeitsystems in einem Drei-Phasen-Verfahren durchgeführt.

In der ersten Phase, dem *Architekturentwurf,* wird die gegebene Aufgabenstellung in eine Anzahl von Komponenten unterteilt. Die Ausführung der Software einer Komponente bezeichnet man als einen *Prozess.* Im Rahmen des Architekturentwurfs wird für jeden Prozess eine *funktionale Prozessspezifikation* erstellt.

Eine *funktionale Prozessspezifikation* umfasst die Syntax und Semantik der Eingabedaten, die Syntax und Semantik der Ausgabedaten und die Syntax und Semantik des inneren Zustandes des Prozesses, sowie einen *Algorithmus,* der beschreibt, wie ein *Prozessprogramm* aus den Eingabedaten und dem anfänglichen inneren Zustand die Ausgabedaten und den nächsten inneren Zustand zu errechnen hat. Die kausalen Abhängigkeiten der Prozesse werden mittels eines *Prozessgraphen* veranschaulicht. Die Prozesse bilden die Knoten des Prozessgraphen, während die Kanten des Prozessgraphen den Datenfluss, d.i. *den Fluss von Nachrichten,* zwischen den Prozessen darstellen. Ein Prozess B ist dabei kausal abhängig von einem Prozess A, wenn das Ergebnis von Prozess A den Ablauf und damit das Resultat von Prozess B beeinflussen kann.

In der zweiten Phase der Systementwicklung, der *Programmierphase,* werden aus den *funktionalen Prozessbeschreibungen* die Prozessprogramme entwickelt und auf der Entwicklungshardware individuell getestet. Eine funktionale Prozessbeschreibung ist die Dokumentation, die das beabsichtigte beobachtbare *Ergebnis* eines Prozesses festlegt. Sie legt nicht fest, wie dieses beobachtbare Ergebnis durch den Aufbau und den Ablauf der Programme im inneren eines Prozesses realisiert wird.

In der dritten Phase der Systementwicklung, der *Integrationsphase,* werden die in der zweiten Phase entwickelten Prozessprogramme integriert und gemeinsam getestet. Erfahrungsgemäß erfordert die Integrationsphase einen hohen Aufwand, da entsprechend dem gegenwärtigen Stand der Technik wesentliche temporale Randbedingungen der Zielhardware erst im Rahmen der Integrationsphase erkannt werden. In mehrfachen Iterationen müssen dann die Prozessprogramme modifiziert werden, um erkannte temporale Randbedingungen der Zielhardware zu respektieren.

Es ist eine Aufgabe der vorliegenden Erfindung, die parallele Entwicklung und Integration der Prozessprogramme eines Echtzeitsystems, insbesondere eines umfangreichen Echtzeitsystems, signifikant zu verbessern.

Diese Aufgabe wird mit einer verteilten Entwicklungshardware mit den Merkmalen des Anspruchs 1 sowie mit einem Verfahren mit den Merkmalen des Anspruchs 2 gelöst.

Ein umfangreiches Echtzeitsystem liegt vor, wenn eine Vielzahl (insbesondere mehr als 10) Entwickler gleichzeitig an dem System arbeiten müssen, um es bis zu einem vorgegebenen Termin fertig zu stellen.

Es ist daher vorgesehen, dass im Rahmen der Softwareentwicklung eines umfangreichen verteilten Echtzeitsystems für jeden Prozess eine maximale *Prozessdauer* $d_{WCZ}$ auf der *Zielhardware* aus $N_{WC}/L_{ZH}$ errechnet wird, wobei $L_{ZH}$ die Leistungsfähigkeit der Zielhardware (in Instruktionen/Zeiteinheit) angibt, und aus $UD = A/L_C$ die *Übertragungsdauer UD* der *Ausgabedaten A* (gemessen in Bytes) von einem vorgelagerten Prozess zu einem nachgelagerten Prozess auf der Zielhardware errechnet wird, wobei Lc die Leistungsfähigkeit des Kommunikationssystems in (Bytes/Zeiteinheit) angibt, und wobei jeder Prozess des Prozessgraphen mit seiner Prozessdauer $d_{WCZ}$ auf der Zielhardware annotiert wird, und wobei jede Kante des Prozessgraphen mit der Übertragungsdauer UD auf der Zielhardware annotiert wird, und wobei, ausgehend von einem Anfangszeitpunkt eines Startknotens, den beispielsweise der Zeitpunkt $t=0$ zugewiesen ist, jeder Markierung des Prozessgraphen der Zeitpunkt zugewiesen wird, der sich durch Addition der Prozessdauern und Übertragungsdauern auf dem Pfad von dem Startknoten bis zu dieser Markierung ergibt, wobei im Falle, dass mehrere Pfade zur gleichen Markierung führen, der jeweils größte Zeitpunkt gewählt wird.

Die Entwicklung eines Prozessprogramms auf der Basis der funktionalen Prozessspezifikation und den aus dem Prozessgraphen ermittelten Zeitpunkten der Anfangs-Markierung und End-Markierung des Prozesses kann auf einem Entwicklungssystem unabhängig von der Entwicklung jedes anderen Prozessprogramms erfolgt.

Nach Fertigstellung der Prozessprogramme wird die Integration der Prozessprogramme in das Gesamtsystem vorgenommen. Dies wird mit der eingangs erwähnten Vorrichtung dadurch gelöst, dass eine verteilte Entwicklungshardware EHW aufgebaut wird, die *isomorph* mit der verteilten Zielhardware ZHW ist.

Die Zielhardware (ZHW) eines verteilen Echtzeitsystems besteht aus einer Anzahl von für die gegebene Aufgabenstellung *kostenoptimierten* Komponenten, die über ein Kommunikationssystem Nachrichten austauschen. Wenn in einem verteilten Echtzeitsystem periodische zeitkritische Nachrichten zwischen den Komponenten ausgetauscht werden, so sind im Zeitplan eines zeitgesteuerten Kommunikationssystem der Zielhardware die periodisch wiederkehrenden Zeitpunkte, vor denen eine zeitkritische Nachricht von einer Komponente beim Kommunikationssystem eintreffen muss, bestimmt. Diese Zeitpunkte können aus dem oben beschriebenen annotierten Prozessgraphen abgeleitet werden.

Das isomorphe zeitgesteuerte Kommunikationssystem der Entwicklungshardware (EHW) enthält den gleichen Zeitplan wie das Kommunikationssystem der ZHW. Die *leistungsfähigen* Komponenten der EHW müssen daher zu den gleichen Zeitpunkten die Nachrichten an das Kommunikationssystem der EHW übergeben wie in der ZHW. Damit wird sichergestellt, dass das temporale Verhalten der EHW dem temporalen Verhalten des ZHW entspricht. Da die EHW leistungsfähiger ist als die kostenoptimierte ZHW, ist die rechtzeitige Bereitstellung der Resultate auf der EHW kein Problem.

Die Lösung der vorliegenden Aufgabe wird mit der erfindungsgemäßen Vorrichtung also dadurch gelöst, dass wesentliche temporale Randbedingungen der Zielhardware frühzeitig ermittelt und bereits beim Aufbau der Entwicklungshardware berücksichtigt werden.

Durch den Entfall der mehrfachen Iterationen in der Integrationsphase werden der Entwicklungsaufwand und die Dauer des Entwicklungsprozesses wesentlich reduziert.

Das Dokument [3], Zilberstein, S., Using Anytime Algorithms in Intelligent Systems. Artificial Intelligence Magazine, Vol.17. No. 3. 1996, beschreibt die Bedeutung von Anytime Algorithmen im Bereich der Artifical Intelligence.

Dokument [4], Kopetz, H., Real-time Systems-Design Principles for Distributed Embedded Applications. Springer Verlag, 2011, liefert eine Beschreibung des Anytime Algorithmus.

Ein Überblick über gängige Verfahren zur Ermittlung der Worst Case Execution Time eines Algorithmus findet sich in [5], Wilhelm, R. et al. (2008). The Worst-Case Execution Time Problem-Overview of Methods and Survey of Tools. ACM Trans. on Embedded Computer Systems, Vol. 7(3). (pp. 1-53).

Das Dokument Martin Fowler: "Continuous Integration", 1. Mai 2006 (2006-05-01), Seiten 1-14, beschreibt Klone, allerdings keine isomorphe Struktur, bei der die Entwicklungshardware leistungsfähiger als die Zielhardware ist.

Die Zeitsteuerung ist beispielsweise beschrieben in Kopetz H et al: "The Time-Triggered Architecture", PROCEEDINGS OF THE IEEE. SPECIAL ISSUE ON EMBEDDED SYSTEMS, XX, XX, 1. Juni 2002 (2002-06-01).

Bevorzugte Ausführungsformen des erfindungsgemäßen Verfahrens, welche für sich alleine oder in beliebiger Kombination miteinander realisiert sein können, sind im Folgenden beschrieben:

*) ein Prozessprogramm wird in Form eines *Anytime Algorithmus* realisiert;

*) auf einem Entwicklungssystem läuft ein Simulationsprogramm ab, das zum Zeitpunkt der Anfangs-Markierung eines Prozesses die Eingabedaten für den Prozess bereitstellt und zum Zeitpunkt der End-Markierung des Prozesses die Ausgabedaten übernimmt und überprüft, ob die vom Prozess errechneten Ausgabedaten korrekt sind;

*) mehrere Entwicklungssysteme kommunizieren über ein zeitgesteuertes Netzwerk, dessen Zeitverhalten der Zielhardware entspricht, und wobei die Entwicklungssysteme entsprechend der Topologie eines Teils oder des gesamten Prozessgraphen vernetzt sind, und wobei ein Prozess zum Zeitpunkt seiner End-Markierung die Ausgangsdaten an das zeitgesteuerte Kommunikationssystem übergibt und das Kommunikationssystem zum Zeitpunkt der Anfangs-Markierung des folgenden Prozesses die Daten für den folgenden Prozess bereitstellt;

*) der gesamte Prozessgraph wird durch eine Anzahl von Entwicklungssystemen nachgebildet, die über ein zeitgesteuertes Kommunikationsnetz kommunizieren, und wobei die Daten der Prozesse entsprechend der Topologie des Prozessgraphen von einem Prozess an die Folgeprozesse übertragen werden, und wobei zwischen einer Endmarkierung eines Terminierungsknotens und einer Anfangsmarkierung der Startknoten des Prozessgraphen ein Simulationsmodell einer zu regelnden Produktionsanlage eingebunden wird.

Im Folgenden ist die Erfindung an Hand der Zeichnung an Hand einer beispielhaften Realisierung näher erörtert. Es zeigt

Fig. 1 die Komponenten eines beispielhaften verteilten Echtzeitsystems, die über ein zeitgesteuertes Kommunikationssystem Nachrichten austauschen, und

Fig. 2 einen einfachen Prozessgraphen einer konkreten beispielhaften Anwendung.

Das folgende konkrete Beispiel zeigt eine der vielen möglichen Realisierungen der neuen Vorrichtung und des neuen Verfahrens. In diesem konkreten Beispiel wird ein System zur Erkennung des Umfeldes und Aktivierung der Notbremsung eines autonomen Fahrzeugs dargestellt und die Erfindung in diesem Zusammenhang erläutert.

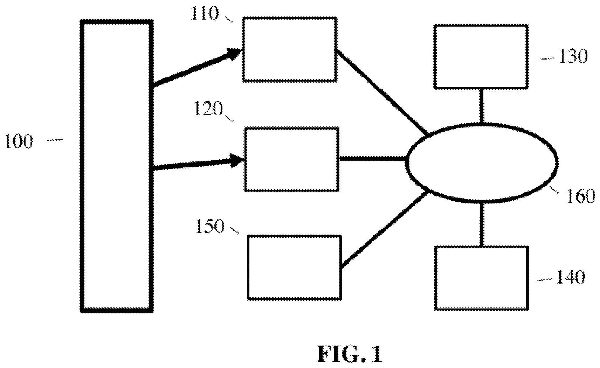

Fig. 1 zeigt die Systemstruktur der gegebenen Anwendung, d.h. die relevanten Komponenten der Zielhardware. Der für die gegenwärtige Betrachtung relevante Teil des Systems besteht aus den fünf Komponenten **110, 120, 130, 140** und **150,** sowie einem zeitgesteuerten Kommunikationssystem **160,** über das die Kommunikation zwischen den fünf Komponenten abgewickelt wird.

In der Architekturphase wird die gegebene Aufgabenstellung auf die fünf Komponenten der Zielhardware aufgeteilt. Die Komponente **110** verfügt über eine Kamera, die das Umfeld des Fahrzeugs **100** beobachtet. Die Komponente **110** nimmt periodisch ein Bild des Umfelds auf und führt die Vorverarbeitung der erfassten Rohdaten, die *Perzeption,* durch, um charakteristische Merkmale, wie Kanten und Flächen im erfassten Bild zu erkennen. Die vorverarbeiteten Daten werden über die zeitgesteuerte Nachrichtenverteilereinheit **160** an die Komponenten **130** und **140** übertragen. Die Komponente **130** realisiert einen speziellen Algorithmus, um in den von Komponente **110** erhaltenen vorverarbeiteten Daten *Verkehrszeichen* zu erkennen, und sendet die erkannten Verkehrszeichen über die zeitgesteuerte Nachrichtenverteilereinheit **160** an die Komponente **150.** Die Komponente **120** ist mit einem Radarsystem ausgestattet, um den Abstand zu Objekten in der Umgebung **100** des autonomen Fahrzeugs zu ermitteln. Die Komponente **120** erfasst periodisch Radarsignale und führt die Vorverarbeitung der erfassten Rohdaten durch, um die Entfernung zu den erfassten Objekten zu ermitteln. Die vorverarbeiteten Daten werden über die zeitgesteuerte Nachrichtenverteilereinheit **160** an die Komponente **140** übertragen. Die Komponente **140** fusioniert mittels eines *Fusionsalgorithmus* die von den Komponenten **110** und **120** erhaltenen Daten, um ein dreidimensionales Bild der Umgebung des Fahrzeugs mit den Entfernungen zu den erkannten Objekten aufzubauen. Dieses Bild wird über die zeitgesteuerte Nachrichtenverteilereinheit **160** an die Komponente **150** übertragen, um das Bild mit den erkannten Verkehrszeichen zu annotieren. Am Ende dieser Verarbeitungsfolge verfügt die Komponente **150** über eine Datenstruktur, die das Umfeld des Fahrzeuges einschließlich der erkannten Objekte und Verkehrszeichen beschreibt. Die Komponente **150** verfügt über einen Algorithmus, der aus dieser Datenstruktur den notwendigen Bremsdruck errechnet.

Im Folgenden wird ein erfindungsgemäßes Verfahren zur verteilten Entwicklung der *Prozessprogramme* eines oben beschriebenen Echtzeitsystems auf einer verteilten Entwicklungshardware näher beschrieben.

Ein *Prozessprogramm* umfasst die Anweisungen an die Hardware einer Komponente, die angeben, wie die beabsichtigten Ergebnisse aus den gegebenen Eingangsdaten zu errechnen sind. Die Ausführung eines Prozessprogramms, d.h. die Ausführung der Software einer Komponente, bezeichnet man als einen *Prozess.* Ein Prozess beginnt zu einem *Anfangszeitpunkt* und endet zu einem *Endzeitpunkt.*

Nach Festlegung der Systemstruktur wird für jede der fünf Komponenten eine funktionale Prozessspezifikation erstellt. Die kausalen Abhängigkeiten der *Prozesse,* werden mittels eines *Prozessgraphen* veranschaulicht.

Ein *Prozessgraph* besteht aus *Knoten* (d.s. die *Kreise*), die die Bearbeitung der Daten durch den auf der Komponente ablaufenden Prozess darstellen, und *Kanten* (d.s. die *gerichteten Linien* zwischen den Knoten,) die den Transport der Daten von einem *vorgelagerten Knoten* zu einem *nachgelagerten Knoten* darstellen. Wenn den Knoten und/oder Kanten eines Prozessgraphen Attribute zugeordnet werden, so bezeichnet man dies als eine *Annotation* des Prozessgraphen.

Die Markierung eines Knotens (eine Form der Annotation), z.B. des Knotens **210,** gibt an, wann der auf dem Knoten **110** ablaufende Prozess **210** beginnt (Markierung **211**) bzw. endet (Markierung 212).

Erfindungsgemäß haben der Prozessgraph der Zielhardware und der Prozessgraph der Entwicklungshardware die gleiche Form.

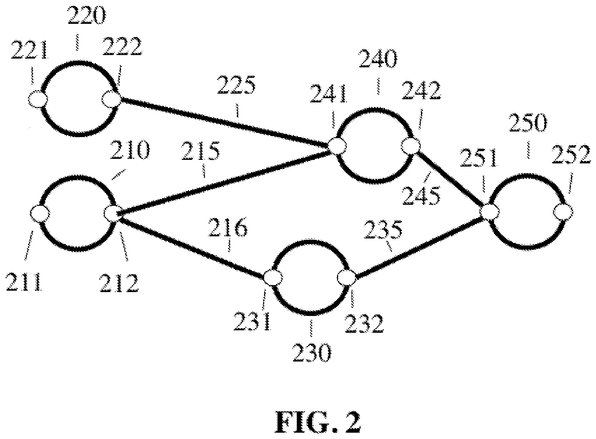

Fig. 2 zeigt einen Prozessgraphen der beschriebenen Anwendung bestehend aus fünf Knoten **210,220, 230, 240,** und **250,** die über Kommunikationskanäle **215, 216, 225, 235** und **245** miteinander verbunden sind. Der Knoten **210** übernimmt die Daten von einer angeschlossenen Kamera. Der Knoten **210** übergibt die vorverarbeiteten Daten über den Kanal **216** an den Knoten **230** und über den Kanal **215** an den Knoten **240.** An den Knoten **220** ist das Radarsystem angeschlossen, um den Abstand zu Gegenständen in der Umgebung des autonomen Fahrzeugs zu ermitteln. Diese Rohdaten werden im Knoten **220** vorverarbeitet und über den Kanal **225** an den Knoten **240** weitergeleitet. Der Knoten **240** führt eine Datenfusion durch, um aus den Daten der Kamera und den Daten des Radarsystems ein Modell der Umgebung des Fahrzeugs zu erstellen, und teilt dieses Modell über den Kanal **245** dem Knoten **250** mit. Der Knoten **230** erkennt die Verkehrszeichen und teilt sie über den Kanal **235** dem Knoten **250** mit. Der Knoten **250** berechnet aus den empfangenen Daten den neuen Sollwert für die Bremskraft.

Die Zuordnung der Prozesse der Fig. 2 zu den Komponenten der Fig. 1 ergibt sich aus der folgenden Tabelle:

Tab. 1: Zuordnung von Prozessen zu Komponenten

| Komponente der Fig. 1 | 110 | 120 | 130 | 140 | 150 |
|---|---|---|---|---|---|
| Prozess der Fig. 2 | 210 | 220 | 230 | 240 | 250 |
| Anfangszeitpunkt des Prozesses | 211 | 221 | 231 | 241 | 251 |
| Endzeitpunkt des Prozesses | 212 | 222 | 232 | 241 | 252 |

Die Algorithmen zur Erkennung des Umfelds eines autonomen Fahrzeugs müssen innerhalb einer vorgegebenen Zeit ein brauchbares (jedoch nicht notwendigerweise ein optimales) Ergebnis liefern. In diesem Bereich der *Artificial Intelligence* haben *Anytime Algorithmen* eine besondere Bedeutung [3] erlangt. Da die Dauer einer Berechnung durch einen Algorithmus in vielen kognitiven Anwendungen stark von der Struktur der Eingabedaten abhängt, kann das Finden einer optimalen Lösung lange dauern. Ein brauchbares Ergebnis, das rechtzeitig vorliegt, ist in vielen Anwendungen von größerem Wert als ein optimales Ergebnis, das später bereitgestellt wird.

Ein *Anytime Algorithmus* ist ein Algorithmus, der aus einem *Wurzelsegment,* das einmal durchlaufen wird und einem *iterativen Segment,* das normalerweise mehrfach durchlaufen wird, besteht [4, p.246]. Nach Durchlaufen des Wurzelsegments wird ein erstes grobes Resultat bereitgestellt, das mit jedem Durchlauf des iterativen Segments verbessert wird. Im Rahmen einer theoretischen Analyse und von experimentellen Messungen eines Anytime Algorithmus wird festgestellt, wieviele Instruktionen im *Durchschnittsfall* $N_{Avg}$ und im *Maximal (Worst Case) Fall Nwc* erforderlich sind, um das Wurzelsegment zu durchlaufen und ein erstes brauchbares Ergebnis zu liefern. Im Normalfall ist die Anzahl der Befehle $N_{Avg}$ viel kleiner als die Anzahl der Befehle *Nwc.*

Über die bekannte Leistungsfähigkeit der Zielhardware, gemessen in *Instruktionen pro Sekunde $L_{ZH}$,* kann nun die Zeitdauer $d_{WCZ}$, die erforderlich ist, um in jedem Fall das Wurzelsegment des gewählten Anytime Algorithmus abzuschließen, wie folgt errechnet werden

$$d_{WCZ} = N_{WC}/L_{ZH}$$

Diese Zeitdauer, die *minimale Verarbeitungszeit $d_{WCZ}$* des analysierten Anytime Algorithmus auf der Zielhardware, bildet eine untere Schranke für die Zuweisung der Rechenzeit auf der Zielhardware. Nach dieser Zeitdauer ist die Verfügbarkeit eines brauchbaren Resultats des Anytime Algorithmus sicher gestellt.

Da viele Algorithmen zur Bilderkennung und Bildverarbeitung in der beschriebenen Anwendung *Anytime Algorithmen* sind, ist bevorzugt vorgesehen, im Rahmen der Analyse der zur Anwendung gelangenden Algorithmen unter Kenntnis der Leistungsfähigkeit der Zielhardware die *minimale Verarbeitungszeit $d_{WCZ}$* für jeden der Prozesse **210, 220, 230, 240** und **250** bereits in der Architekturphase der Systementwicklung zu errechnen.

Wenn in einem Projekt kein Anytime Algorithmus eingesetzt wird, so muss die *Worst Case Execution Time* (WCET) des gewählten Algorithmus auf der Zielhardware ermittelt werden. Ein Überblick über gängige Verfahren zur Ermittlung der WCET eines Algorithmus findet sich in [5].

Im Prozessgraph von Fig. 2 sind der Anfangszeitpunkt und der Endzeitpunkt jedes Prozesses eingetragen, d.h. der Prozessgraph ist mit den Anfangszeitpunkten und den Endzeitpunkten der Prozesse *markiert.* Die Markierung des Prozessgraphen errechnet sich wie folgt: Die *Anfangszeitpunkte* **211, 221** der *Startknoten* des Prozessgraphen der Fig. 2 werden a priori mit *t* = 0 festgelegt. Die Endzeitpunkte **212** und **222** ergeben sich aus der Summe der jeweiligen Anfangszeitpunkte und der *Verarbeitungszeit $d_{WCZ}$* des jeweiligen Prozesses auf der Zielhardware. Diese Endzeitpunkte **212** und **222** legen auch den frühesten Zeitpunkt fest, zu dem das zeitgesteuerte Kommunikationssystem **160** der Zielhardware die Daten übernehmen kann. Die *Übertragungsdauer UD der Ausgabedaten 216* vom Prozess **210** zum Prozess **230** errechnet sich aus der Bytelänge A der Ausgabedaten des Prozesses **210** an den Prozess **230** und der Leistungsfähigkeit Lc des Kommunikationssystems, gemessen in Bytes/Sekunde, wie folgt:

$$UD = A/L_{C.}$$

Die Summe des Endzeitpunktes **212** und der Übertragungsdauer UD **(216)** ergibt den Startzeitpunkt **231** des Prozesses **230**. Wenn ein Prozess Eingangsdaten von zwei vorgelagerten Prozessen empfängt, z.B. der Prozess **240** erhält Eingangsdaten vom Prozess **210** und vom Prozess **220,** so wird der größere der beiden errechneten Zeitpunkte als Startzeitpunkt des Prozesses **240** genommen. Das beschriebene Berechnungsverfahren wird schrittweise angewendet, bis das Ende des Prozessgraphen, d.i. im gegebenen Fall der Zeitpunkt **252** von Prozess **250** erreicht wird. In der Folge wird jeder Prozess des Prozessgraphen (d.s. die Knoten) mit der Rechenzeit des Prozesses, d.i. die Differenz zwischen dem Endzeitpunkt und dem Anfangszeitpunkt des Prozesses, und jede Kante mit der Übertragungszeit, das ist die Differenz zwischen dem Endzeitpunkt des vorgelagerten Prozesses und dem Anfangszeitpunkt des nachgelagerten Prozesses annotiert.

In der zweiten Phase des Systementwurfs, der *Programmierphase,* werden die den Prozessen auf der Entwicklungshardware bereitgestellten Verarbeitungszeiten $d_{WCE}$ entsprechend der Formel

$$d_{WCE} = N_{WC}/L_{EH}$$

berechnet, wobei *Nwc* die Maximalanzahl *(Worst Case)* der notwendigen Instruktionen z.B. für das Wurzelsegment des Anytime Algorithmus angibt und $L_{EH}$ die bekannte Leistungsfähigkeit der Entwicklungshardware in *Instruktion pro Sekunde* angibt. Um sicherzustellen, dass im Entwicklungssystem der iterative Teil eines Anytime Algorithmus gleich oft ausgeführt wird wie im Zielsystem, wird jeder Prozess im Entwicklungssystem nach seinem Zeitintervall $d_{WCE}$ unterbrochen. Das Zeitintervall $d_{WCZ}$-$d_{WCE}$ verbringt das Entwicklungssystem im Wartezustand. Durch diese Maßnahmen wird gewährleistet, dass die temporale Struktur des Entwicklungssystems identisch ist mit der temporalen Struktur des Zielsystems. Es können somit die einzelnen Prozesse unabhängig voneinander auf verschiedenen Entwicklungssystemen parallel entwickelt werden, wobei die temporale Struktur des Zielsystems erhalten bleibt.

Wenn die unabhängigen Entwicklungssysteme mit einem zeitgesteuerten Kommunikationssystem, dessen Zeitpläne den Parametern des Zielsystems entsprechen, verbunden werden, so kann eine verteilte Simulation des Gesamtsystems auf den verteilten Entwicklungssystemen unter den gleichen temporalen Bedingungen wie im Zielsystem realisiert werden. Damit lassen sich die Prozesse schrittweise im Entwicklungssystem integrieren. So können zum Anfangszeitpunkt eines Prozesses die Eingabedaten für den Prozess von einem Simulationsprogramm bereitgestellt und zum Endzeitpunkt des Prozesses die Ausgabedaten übernommen und überprüft werden, ob die vom Prozess errechneten Ausgabedaten korrekt sind.

In weiterer Folge kann das Simulationsprogramm durch eine zu steuernde Produktionsanlage (*Hardware in the Loop*) ersetzt und überprüft werden, ob das Gesamtsystem, bestehend aus der Produktionsanlage und dem verteilten Echtzeitsystem das beabsichtigte Verhalten zeigt.

**Patentansprüche**

1. Verteilte Entwicklungshardware zur Integration von *Prozessprogrammen* eines verteilten Echtzeitsystems bestehend aus einer Vielzahl von Komponenten (100 - 150) und mindestens einem zeitgesteuerten Kommunikationssystem (160), wobei eine gegebene Aufgabenstellung in eine Vielzahl von parallel ablauffähigen Prozessen (210 - 250) aufgeteilt ist, deren Abhängigkeiten in Form eines markierten und annotierten Prozessgraphen dargestellt sind, und wobei für jeden Prozess eine funktionale Prozessspezifikation vorliegt, wobei die verteilte Entwicklungshardware zur zeitrichtigen Integration von Prozessprogrammen derart erstellt ist, dass die Struktur der verteilten Entwicklungshardware isomorph zur Struktur einer Zielhardware ist,

wobei ein isomorphes zeitgesteuertes Kommunikationssystem der Entwicklungshardware den gleichen Zeitplan wie das Kommunikationssystem der Zielhardware enthält, sodass die *leistungsfähigen* Komponenten der Entwicklungshardware zu den gleichen Zeitpunkten die Nachrichten an das Kommunikationssystem der Entwicklungshardware übergeben müssen wie in der kostenoptimierten Zielhardware, wodurch sichergestellt wird, dass das temporale Verhalten der Entwicklungshardware dem temporalen Verhalten der Zielhardware entspricht, und wobei

ein Zeitplan für das zeitgesteuerte Kommunikationssystem der verteilten Entwicklungshardware aus einer gegebenen funktionalen Prozessspezifikation derart bestimmt wird, dass für jeden Prozess eine maximale Prozessdauer $d_{WCZ}$ auf der Zielhardware aus $N_{WC}/L_{ZH}$ errechnet wird, wobei $L_{ZH}$ die Leistungsfähigkeit der Zielhardware in Instruktionen/Zeiteinheit angibt, und wobei $N_{WC}$ die Maximalanzahl von Instruktionen für die Ausführung eines jeden Prozesses auf der Zielhardware ist, und aus $UD = A/L_C$ *die Übertragungsdauer UD* der Ausgabedaten *A*, gemessen in Bytes, von einem vorgelagerten Prozess zu einem nachgelagerten Prozess auf der Zielhardware errechnet wird, wobei $L_C$ die Leistungsfähigkeit des Kommunikationssystems in Bytes/Zeiteinheit angibt, und wobei jeder Prozess des Prozessgraphen mit seiner Prozessdauer $d_{WCZ}$ auf der Zielhardware annotiert wird, und wobei jede Kante des Prozessgraphen mit der Übertragungsdauer *UD* auf der Zielhardware annotiert wird, und wobei, ausgehend von einem Anfangszeitpunkt eines Startknotens, dem beispielsweise der Zeitpunkt *t=0* zugewiesen ist, jeder Markierung des Prozessgraphen der Zeitpunkt zugewiesen wird, der sich durch Addition der Prozessdauern und Übertragungsdauern auf dem Pfad von dem Startknoten bis zu dieser Markierung ergibt, wobei die Markierung eines Knotens angibt, wann der auf dem Knoten ablaufende Prozess beginnt oder endet, und

wobei im Falle, dass mehrere Pfade zur gleichen Markierung führen, der jeweils größte Zeitpunkt gewählt wird, wobei periodisch wiederkehrende Zeitpunkte, zu denen eine Nachricht einer Komponente an andere Komponenten über das zeitgesteuerte Kommunikationssystem zu transportieren ist, in der verteilten Entwicklungshardware die gleichen sind wie in der Zielhardware, und wobei sich diese Zeitpunkte aus der Analyse des annotierten Prozessgraphen ergeben,

und wobei die im Prozessgraphen markierten Zeitpunkte, zu denen die Prozessdauer einer Komponente beendet ist und mit der Übertragung der Ausgangsdaten zur folgenden Komponente begonnen werden kann in den Zeitplan des zeitgesteuerten Kommunikationssystems zum Transport der Ausgangsdaten dieser Komponente übernommen werden,

und wobei die Entwicklung eines Prozessprogramms auf Basis von funktionalen Prozessspezifikation und den aus dem Prozessgraphen ermittelten Zeitpunkten der Anfangs-Markierung und End-Markierung des Prozesses auf einem Entwicklungssystem unabhängig von der Entwicklung jedes anderen Prozessprogramms erfolgt.

2.  Verfahren zur verteilten Entwicklung von *Prozessprogrammen* eines verteilten Echtzeitsystems, wobei eine gegebene Aufgabenstellung in eine Vielzahl von parallel ablauffähigen Prozessen (210 - 250) aufgeteilt wird, deren Abhängigkeiten in Form eines markierten und annotierten Prozessgraphen dargestellt sind, und wobei für jeden Prozess (210 - 250) eine funktionale Prozessspezifikation vorliegt, wobei

eine verteilte Entwicklungshardware zur zeitrichtigen Integration von Prozessprogrammen derart erstellt wird, dass die Struktur der verteilten Entwicklungshardware isomorph zur Struktur einer Zielhardware ist,

wobei ein isomorphes zeitgesteuertes Kommunikationssystem (160) der Entwicklungshardware den gleichen Zeitplan wie das Kommunikationssystem der Zielhardware enthält, sodass die *leistungsfähigen* Komponenten der Entwicklungshardware zu den gleichen Zeitpunkten die Nachrichten an das Kommunikationssystem der Entwicklungshardware übergeben müssen wie in der kostenoptimierten Zielhardware, wodurch sichergestellt wird, dass das temporale Verhalten der Entwicklungshardware dem temporalen Verhalten der Zielhardware entspricht, und wobei

ein Zeitplan für das zeitgesteuerte Kommunikationssystem der verteilten Entwicklungshardware aus einer gegebenen funktionalen Prozessspezifikation derart bestimmt wird, dass für jeden Prozess eine maximale Prozessdauer $d_{WCZ}$ auf der Zielhardware aus $N_{WC}/L_{ZH}$ errechnet wird, wobei $L_{ZH}$ die Leistungsfähigkeit der Zielhardware in Instruktionen/Zeiteinheit angibt, und wobei $Nwc$ die Maximalanzahl von Instruktionen für die Ausführung eines jeden Prozesses auf der Zielhardware ist, und

aus $UD = A/L_C$ *die Übertragungsdauer UD* der Ausgabedaten *A*, gemessen in Bytes, von einem vorgelagerten Prozess zu einem nachgelagerten Prozess auf der Zielhardware errechnet wird, wobei Lc die Leistungsfähigkeit des Kommunikationssystems in Bytes/Zeiteinheit angibt, und wobei

jeder Prozess des Prozessgraphen mit seiner Prozessdauer $d_{WCZ}$ auf der Zielhardware annotiert wird, und wobei jede Kante des Prozessgraphen mit der Übertragungsdauer *UD* auf der Zielhardware annotiert wird, und wobei, ausgehend von einem Anfangszeitpunkt eines Startknotens, dem beispielsweise der Zeitpunkt *t=0* zugewiesen ist, jeder Markierung des Prozessgraphen der Zeitpunkt zugewiesen wird, der sich durch Addition der Prozessdauern und Übertragungsdauern auf dem Pfad von dem Startknoten bis zu dieser Markierung ergibt, wobei die Markierung eines Knotens angibt, wann der auf dem Knoten ablaufende Prozess beginnt oder endet, und

wobei im Falle, dass mehrere Pfade zur gleichen Markierung führen, der jeweils größte Zeitpunkt gewählt wird, wobei periodisch wiederkehrende Zeitpunkte, zu denen eine Nachricht einer Komponente an andere Komponenten über das zeitgesteuerte Kommunikationssystem zu transportieren ist, in der verteilten Entwicklungshardware die gleichen sind wie in der Zielhardware, und wobei sich diese Zeitpunkte aus der Analyse des annotierten Prozessgraphen ergeben,

und wobei die im Prozessgraphen markierten Zeitpunkte, zu denen die Prozessdauer einer Komponente beendet ist und mit der Übertragung der Ausgangsdaten zur folgenden Komponente begonnen werden kann in den Zeitplan des zeitgesteuerten Kommunikationssystems zum Transport der Ausgangsdaten dieser Komponente übernommen werden,

und wobei die Entwicklung eines Prozessprogramms auf der Basis der funktionalen Prozessspezifikation und den aus dem Prozessgraphen ermittelten Zeitpunkten der Anfangs-Markierung und End-Markierung des Prozesses auf einem Entwicklungssystem unabhängig von der Entwicklung jedes anderen Prozessprogramms erfolgt.

3. Verfahren nach Anspruch 2, **dadurch gekennzeichnet, dass** ein Prozessprogramm in Form eines *Anytime Algorithmus* realisiert wird.

4. Verfahren nach Anspruch 2 oder 3, **dadurch gekennzeichnet, dass** auf einem Entwicklungssystem ein Simulationsprogramm abläuft, das zum Zeitpunkt der Anfangs-Markierung eines Prozesses die Eingabedaten für den Prozess bereitstellt und zum Zeitpunkt der End-Markierung des Prozesses die Ausgabedaten übernimmt und überprüft, ob die vom Prozess errechneten Ausgabedaten korrekt sind.

5. Verfahren nach einem der Ansprüche 2 bis 4, **dadurch gekennzeichnet, dass** mehrere Entwicklungssysteme über ein zeitgesteuertes Netzwerk kommunizieren, dessen Zeitverhalten der Zielhardware entspricht, und wobei die Entwicklungssysteme entsprechend der Topologie eines Teils oder des gesamten Prozessgraphen vernetzt sind, und wobei ein Prozess zum Zeitpunkt seiner End-Markierung die Ausgangsdaten an das zeitgesteuerte Kommunikationssystem übergibt und das Kommunikationssystem zum Zeitpunkt der Anfangs-Markierung des folgenden Prozesses die Daten für den folgenden Prozess bereitstellt.

6. Verfahren nach einem der Ansprüche 2 bis 5, **dadurch gekennzeichnet, dass** der gesamte Prozessgraph durch eine Anzahl von Entwicklungssystemen nachgebildet wird, die über ein zeitgesteuertes Kommunikationsnetz kommunizieren, und wobei die Daten der Prozesse entsprechend der Topologie des Prozessgraphen von einem Prozess an die Folgeprozesse übertragen werden, und wobei zwischen einer Endmarkierung **(252)** eines Terminierungsknotens **(250)** und einer Anfangsmarkierung **(211, 221)** der Startknoten **(210, 220)** des Prozessgraphen ein Simulationsmodell einer zu regelnden Produktionsanlage eingebunden wird.

**Claims**

1. Distributed development hardware for integrating process programs of a distributed real-time system, comprising a multiplicity of components (100 - 150) and at least one time-triggered communication system (160), wherein a given task is divided into a multiplicity of processes (210 - 250) which are suitable to run in parallel and whose dependencies are represented in the form of a marked and annotated process graph, and wherein a functional process specification exists for each process, wherein

the distributed development hardware is developed for time-correct integration of process programs in such a way that the structure of the distributed development hardware is isomorphic to the structure of a target hardware, wherein an isomorphic time-triggered communication system of the development hardware contains the same schedule as the communication system of the target hardware, so that the performant components of the development hardware have to deliver the messages to the communication system of the development hardware at the same times as in the cost-optimized target hardware, thereby ensuring that the temporal behaviour of the development hardware corresponds to the temporal behaviour of the target hardware, and wherein

a schedule for the time-triggered communication system of the distributed development hardware is determined from a given functional process specification such that for each process a maximum process duration $d_{WCZ}$ on the target hardware is calculated from $NWC/L_{ZH}$, where $L_{ZH}$ is the performance of the target hardware in instructions per unit of time and $N_{WC}$ is the maximum number of instructions for the execution of each process on the target hardware, and

from $UD = A/L_C$ the transmission time $UD$ of the output data $A$, measured in bytes, from an upstream process to a downstream process on the target hardware is calculated, wherein $L_C$ denotes the performance of the communication system in bytes per unit of time, and wherein

each process of the process graph is annotated with its process duration $d_{WCZ}$ on the target hardware, and wherein

each edge of the process graph is annotated with its transmission duration $UD$ on the target hardware, and wherein,

starting from a starting time of a start node, to which for example the time $t$=0 is assigned, to each marker of the process graph the time which results from adding the process durations and transmission durations on the path from the start node to this marker is assigned,

the marker of a node indicating the time when the process running on the node starts or ends, and wherein in the case that several paths lead to the same marker, the largest time is selected in each case,

wherein periodically recurring times at which a message of a component is to be transported to other components via the time-triggered communication system are the same in the distributed development hardware as in the target hardware, and wherein these times result from the analysis of the annotated process graph,

and wherein the times marked in the process graph, at which the process duration of a component is finished and the transfer of the output data to the following component can be started, are taken over into the schedule of the time-triggered communication system for the transport of the output data of this component, and wherein the development of a process program is, based on the functional process specification and the times of the start marker and end marker of the process as determined from the process graph, performed on a development system independently of the development of any other process program.

2. Method for the distributed development of process programs of a distributed real-time system, wherein a given task is divided into a plurality of processes (210 - 250) which are suitable to run in parallel and whose dependencies are represented in the form of a marked and annotated process graph, and wherein a functional process specification exists for each process (210 - 250), wherein a distributed development hardware is developed for time-correct integration of process programs in such a way that the structure of the distributed development hardware is isomorphic to the structure of a target hardware,

wherein an isomorphic time-triggered communication system (160) of the development hardware contains the same schedule as the communication system of the target hardware, so that the performant components of the development hardware have to deliver the messages to the communication system of the development hardware at the same times as in the cost-optimized target hardware, thereby ensuring that the temporal behaviour of the development hardware corresponds to the temporal behaviour of the target hardware, and wherein a schedule for the time-triggered communication system of the distributed development hardware is determined from a given functional process specification such that for each process a maximum process duration $d_{WCZ}$ on the target hardware is calculated from $N_{WC}/L_{ZH}$, where $L_{ZH}$ is the performance of the target hardware in instructions per unit of time and $N_{WC}$ is the maximum number of instructions for the execution of each process on the target hardware, and

from $UD = A/L_C$ the transmission time $UD$ of the output data $A$, measured in bytes, from an upstream process to a downstream process on the target hardware is calculated, wherein $L_C$ denotes the performance of the communication system in bytes per unit of time, and wherein each process of the process graph is annotated with its process duration $d_{WCZ}$ on the target hardware, and wherein

each edge of the process graph is annotated with its transmission duration $UD$ on the target hardware, and wherein,

starting from a starting time of a start node, to which for example the time $t=0$ is assigned, to each marker of the process graph the time which results from adding the process durations and transmission durations on the path from the start node to this marker is assigned,

the marker of a node indicating when the process running on the node starts or ends, and wherein in the case that several paths lead to the same marker, the largest time is selected in each case,

wherein periodically recurring times at which a message of a component is to be transported to other components via the time-triggered communication system are the same in the distributed development hardware as in the target hardware, and wherein these times result from the analysis of the annotated process graph,

and wherein the times marked in the process graph, at which the process duration of a component is finished and the transfer of the output data to the following component can be started, are taken over into the schedule of the time-triggered communication system for the transport of the output data of this component, and wherein the development of a process program is, based on the functional process specification and the times of the start marker and end marker of the process as determined from the process graph, performed on a development system independently of the development of any other process program.

3. Method according to claim 2, **characterized in that** a process program is realized in the form of an anytime algorithm.

4. Method according to claim 2 or 3, **characterized in that** on a development system a simulation program is running, which at the time of the start marker of a process provides the input data for the process and at the time of the end marker of the process takes over the output data and checks whether the output data calculated by the process are correct.

5. Method according to any one of claims 2 to 4, **characterized in that** several development systems communicate via a time-triggered network whose temporal behaviour corresponds to the target hardware, and the development systems being network-linked according to the topology of part or all of the process graph, and wherein a process transfers the output data to the time-triggered communication system at the time of its end marker and the communication system provides the data for the following process at the time of the start marker of the following process.

6. Method according to any one of claims 2 to 5, **characterized in that** the entire process graph is emulated by a number of development systems communicating via a time-triggered communication network, and wherein the data of the processes are transmitted from one process to the subsequent processes according to the topology of the process graph, and wherein a simulation model of a production plant to be controlled is integrated between an end marker (252) of a termination node (250) and a start marker (211, 221) of the start nodes (210, 220) of the process graph.

**Revendications**

1. Matériel de développement distribué pour l'intégration de programmes de processus d'un système en temps réel distribué comprenant une pluralité de composants (100-150) et au moins un système de communication (160) en temps déclenché, une tâche donnée étant divisée en une pluralité de processus (210-250) pouvant s'exécuter en parallèle et dont les dépendances sont représentées sous la forme d'un graphe de processus marqué et annoté, et une spécification de processus fonctionnelle étant disponible pour chaque processus,

le matériel de développement distribué étant créé pour l'intégration correcte dans le temps de programmes de processus de telle sorte que la structure du matériel de développement distribué est isomorphe à la structure d'un matériel cible,

un système isomorphe de communication en temps déclenché du matériel de développement contenant le même calendrier que le système de communication du matériel cible, de sorte que les composants performants du matériel de développement doivent transmettre les messages au système de communication du matériel de développement aux mêmes moments que dans le matériel cible à coût optimisé, garantissant que le comportement temporel du matériel de développement correspond au comportement temporel du matériel cible, et

un calendrier pour le système de communication temporisé du matériel de développement distribué étant déterminé à partir d'une spécification de processus fonctionnel donnée de sorte que, pour chaque processus, une durée de processus maximale $d_{WCZ}$ sur le matériel cible est calculée à partir de $N_{WC}/L_{ZH}$, où $L_{ZH}$ est la performance du matériel cible en instructions/unité de temps, et $N_{WC}$ est le nombre maximal d'instructions pour l'exécution de chaque processus sur le matériel cible, et à partir de $UD = A/L_C$ le temps de transmission $UD$ des données de sortie $A$, mesurées en octets, d'un processus amont à un processus aval sur le matériel cible étant calculé, où $L_C$ indique la performance du système de communication en octets/unité de temps, et chaque processus du graphe de processus étant annoté avec sa durée de processus $d_{WCZ}$ sur le matériel cible, et chaque bord du graphe de processus est annoté avec la durée de transmission $UD$ sur le matériel cible, et à partir d'un temps de départ d'un nœud de départ, auquel est attribué, par exemple, le temps t=0, à chaque marqueur du graphe de processus le temps étant attribué qui résulte de l'addition des durées de processus et des durées de transmission sur le chemin allant du nœud de départ à ce marqueur,

le marqueur d'un nœud indiquant quand le processus s'exécutant sur le nœud commence ou se termine, et où, dans le cas de plusieurs chemins menant à la même marque, le point temporel le plus important dans chaque cas est sélectionné,

où des points temporels périodiquement récurrents auxquels un message d'un composant doit être transporté vers d'autres composants via le système de communication à commande temporelle sont les mêmes dans le matériel de développement distribué que dans le matériel cible, ces points temporels résultant de l'analyse du graphe de processus annoté,

et les points de temps marqués dans le graphe du processus, auxquels la durée du processus d'un composant est terminée et le transfert des données de sortie vers le composant suivant peut être lancé, étant repris dans le calendrier du système de communication en temps déclenché pour le transport des données de sortie de ce composant,

et le développement d'un programme de processus sur la base de la spécification du processus fonctionnel et des temps du marqueur de début et du marqueur de fin du processus déterminés à partir du graphe de processus étant effectué sur un système de développement indépendamment du développement de tout autre programme de processus.

2. Procédé pour le développement distribué de programmes de processus d'un système en temps réel distribué, dans lequel une tâche donnée est divisée en une multiplicité de processus (210 - 250) pouvant s'exécuter en parallèle et dont les dépendances sont représentées sous la forme d'un graphe de processus marqué et annoté, et une spécification de processus fonctionnelle étant disponible pour chaque processus (210 - 250), dans lequel

un matériel de développement distribué étant créé pour l'intégration correcte dans le temps de programmes de processus de telle sorte que la structure du matériel de développement distribué est isomorphe à la structure d'un matériel cible,

un système isomorphe de communication en temps déclenché (160) du matériel de développement contenant le même calendrier que le système de communication du matériel cible, de sorte que les composants performants du matériel de développement doivent transmettre les messages au système de communication du matériel de développement aux mêmes moments que dans le matériel cible à coût optimisé, garantissant ainsi que le comportement temporel du matériel de développement correspond au comportement temporel du matériel cible, et

un calendrier pour le système de communication temporisé du matériel de développement distribué étant déterminé à partir d'une spécification de processus fonctionnel donnée de sorte que, pour chaque processus, une durée de processus maximale $d_{WCZ}$ sur le matériel cible est calculée à partir de $N_{WC}/L_{ZH}$, où $L_{ZH}$ est la performance du matériel cible en instructions/unité de temps, et $N_{WC}$ est le nombre maximal d'instructions pour l'exécution de chaque processus sur le matériel cible, et à partir de $UD = A/L_C$ le temps de transmission $UD$ des données de sortie $A$, mesurées en octets, d'un processus amont à un processus aval sur le matériel cible étant calculé, où $L_C$ indique la performance du système de communication en octets/unité de temps, et chaque processus du graphe de processus étant annoté avec sa durée de processus $d_{WCZ}$ sur le matériel cible, et chaque bord du graphe de processus est annoté avec la durée de transmission $UD$ sur le matériel cible, et à partir d'un temps de départ d'un nœud de départ, auquel est attribué, par exemple, le temps t=0, à chaque marqueur du graphe de processus le temps étant attribué qui résulte de l'addition des durées de processus et des durées de transmission sur le chemin allant du nœud de départ à ce marqueur,

le marqueur d'un nœud indiquant quand le processus s'exécutant sur le nœud commence ou se termine, et où, dans le cas de plusieurs chemins menant à la même marque, le point temporel le plus important dans chaque cas est sélectionné,

où des points temporels périodiquement récurrents auxquels un message d'un composant doit être transporté vers d'autres composants via le système de communication à commande temporelle sont les mêmes dans le matériel de développement distribué que dans le matériel cible, ces points temporels résultant de l'analyse du graphe de processus annoté,

et les points de temps marqués dans le graphe du processus, auxquels la durée du processus d'un composant est terminée et le transfert des données de sortie vers le composant suivant peut être lancé, étant repris dans le calendrier du système de communication en temps déclenché pour le transport des données de sortie de ce composant,

et le développement d'un programme de processus sur la base de la spécification du processus fonctionnel et des temps du marqueur de début et du marqueur de fin du processus déterminés à partir du graphe de processus étant effectué sur un système de développement indépendamment du développement de tout autre programme de processus.

3. Procédé selon la revendication 2, **caractérisé en ce qu'**un programme de processus est réalisé sous la forme d'un algorithme anytime.

4. Procédé selon la revendication 2 ou 3, **caractérisé en ce qu'**un programme de simulation s'exécute sur un système de développement qui fournit les données d'entrée pour le procédé au moment du marqueur de début d'un procédé et reprend les données de sortie au moment du marqueur de fin du procédé et vérifie si les données de sortie calculées par le procédé sont correctes.

5. Procédé selon l'une quelconque des revendications 2 à 4, **caractérisé en ce que** plusieurs systèmes de développement communiquent par l'intermédiaire d'un réseau en temps déclenché, dont la synchronisation correspond à celle du matériel cible, et les systèmes de développement étant mis en réseau selon la topologie d'une partie ou de la totalité du graphe de processus, et où un processus transfère les données de sortie au système de communication en temps déclenché au moment de son marqueur de fin et le système de communication fournit les données pour le processus suivant au moment du marqueur de début du processus suivant.

6. Procédé selon l'une quelconque des revendications 2 à 5, **caractérisé en ce que** le graphe de processus entier est simulé par un nombre des systèmes de développement qui communiquent par l'intermédiaire d'un réseau de communication en temps déclenché, et les données des processus étant transmises d'un processus aux processus suivants selon la topologie du graphe de processus, et un modèle de simulation d'une installation de production à commander étant intégré entre un marqueur de fin (252) d'un nœud de fin (250) et un marqueur de début (211, 221) des nœuds de début (210, 220) du graphe de processus.

FIG. 1

EP 3 114 536 B1

FIG. 2

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ZILBERSTEIN, S.** Using Anytime Algorithms in Intelligent Systems. *Artificial Intelligence Magazine,* 1996, vol. 17 (3
- **KOPETZ, H.** Real-time Systems-Design Principles for Distributed Embedded Applications. Springer Verlag, 2011
- **WILHELM, R. et al.** The Worst-Case Execution Time Problem-Overview of Methods and Survey of Tools. *ACM Trans. on Embedded Computer Systems,* 2008, vol. 7 (3), 1-53

- **MARTIN FOWLER.** *Continuous Integration,* 01. Mai 2006, 1-14
- **KOPETZ H et al.** The Time-Triggered Architecture. *PROCEEDINGS OF THE IEEE. SPECIAL ISSUE ON EMBEDDED SYSTEMS, XX,* 01. Juni 2002, vol. XX